# EUROPEAN PATENT APPLICATION

(11) **EP 3 570 170 A1**
(43) Date of publication of application: **20.11.2019**
(21) Application number: 17872887.9
(22) Date of filing: 30.08.2017
(51) Int. Cl.: G06F 11/30

(54) **ERROR DETECTION METHOD AND APPARATUS FOR TRANSACTION SYSTEM, STORAGE MEDIUM AND COMPUTER DEVICE**

(30) Priority: 14.12.2016 CN 201611154475
(71) Applicant: Ping An Technology (Shenzhen) Co., Ltd., Shenzhen, Guangdong 518000 (CN)
(72) Inventor: DU, Yisen, Shenzhen, Guangdong 518000 (CN)
(74) Representative: Michalski Hüttermann & Partner Patentanwälte mbB
(86) International application number: PCT/CN2017/099728
(87) International publication number: WO 2018/107812

(57) **Abstract**

A method of detecting transaction system error includes: acquiring a transaction identifier; determining a transaction data flow direction category corresponding to the transaction identifier; finding a detection sequence table that matches the transaction data flow direction category, wherein the detection sequence table includes detection items arranged in sequence, the sequence of the detection items matches a transaction data flow direction corresponding to the transaction data flow direction category in the cooperative transaction system; determining a transaction data transmission link in the cooperative transaction system corresponding to the transaction identifier; detecting the transaction data transmission link successively according to the detection items in the detection sequence table.

## Description

### CROSS REFERANCE TO RELATED APPLICATIONS

The present application claims priority of China Patent Application No. 201611154475.1, titled " method and device of detecting transaction system error", filed Dec. 14, 2016, the entire content of which is incorporated herein in its entirety.

### TECHNICAL FIELD

The present disclosure relates to computer technology, and more particularly relates to a method of detecting transaction system error, a device, a storage medium, and a computer equipment.

### BACKGROUND

With the development of computer technology, it becomes more and more common to complete a transaction process through a computer-based cooperative transaction system. However, since the cooperative transaction system involves a cooperation among multiple systems, each time when making a cooperative transaction, connection status of each arbitrary system or between the multiple systems involved in implementing the cooperative transaction affect success or failure of the cooperative transaction. Therefore, the transaction process which involves cooperation among multiple systems is prone to error, therefore causing a failure of the cooperative transaction failed.

In a conventional detection of transaction error, an inspector needs to conduct multiple interactive operations with multiple systems involved in the cooperative transaction system to detect errors in the cooperative transaction system, which has a tedious process and a low detection efficiency.

### SUMMARY

According to various embodiments of the present disclosure, a method of detecting transaction system error, a device, a storage medium, and a computer equipment are provided.

A method of detecting transaction system error includes:
acquiring a transaction identifier;
determining a transaction data flow direction category corresponding to the transaction identifier;
finding a detection sequence table that matches the transaction data flow direction category, wherein the detection sequence table includes detection items arranged in sequence, the sequence of the detection items matches a transaction data flow direction corresponding to the transaction data flow direction category in a cooperative transaction system;
determining a transaction data transmission link corresponding to the transaction identifier in the cooperative transaction system; and
detecting the transaction data transmission link successively according to the detection items in the detection sequence table.

A device of detecting transaction system error includes:
an acquiring module configured to acquire a transaction identifier and determine a transaction data flow direction category corresponding to the transaction identifier;
a searching module configured to find a detection sequence table that matches the transaction data flow direction category, wherein the detection sequence table includes detection items arranged in sequence, the sequence of the detection items matches a transaction data flow direction corresponding to the transaction data flow direction category in the cooperative transaction system; and determine a transaction data transmission link corresponding to the transaction identifier in the cooperative transaction system; and
a detecting module configured to detect the transaction data transmission link successively according to the detection items in the detection sequence table.

One or more computer-executable non-transitory storage medium stores computer readable instructions that, when executed on one or more processors, cause the one or more processors to perform following steps of:
acquiring a transaction identifier;
determining a transaction data flow direction category corresponding to the transaction identifier;
finding a detection sequence table that matches the transaction data flow direction category, wherein the detection sequence table comprises detection items arranged in sequence, the sequence of the detection items matches a transaction data flow direction corresponding to the transaction data flow direction category in a cooperative transaction system;
determining a transaction data transmission link corresponding to the transaction identifier in the cooperative transaction system; and
detecting the transaction data transmission link successively according to the detection items in the detection sequence table.

A computer equipment includes a processor and a memory storing computer readable instructions, which, when executed by the processor causes the processor to perform following steps of:
acquiring a transaction identifier;
determining a transaction data flow direction category corresponding to the transaction identifier;
finding a detection sequence table that matches the transaction data flow direction category, wherein the detection sequence table comprises detection items arranged in sequence, the sequence of the detection items matches a transaction data flow direction corresponding to the transaction data flow direction category in a cooperative transaction system;
determining a transaction data transmission link corresponding to the transaction identifier in the cooperative transaction system; and
detecting the transaction data transmission link successively according to the detection items in the detection sequence table.

Details of one or more embodiments of the present application are set forth in accompanying drawings and description below. Other features, objects, and advantages of the present application will become apparent upon review of the following specification, drawings, and claims.

### BRIEF DESCRIPTION OF THE DRAWINGS

To describe the technical solutions in the embodiments of the present application more clearly, the following briefly introduces the accompanying drawings required for describing the embodiments. Apparently, the accompanying drawings in the following description merely show some embodiments of the present application. For those of ordinary skill in the art, other drawings can be acquired based on these drawings without any creative work.
FIG. 1 is a schematic diagram of an application environment of a method of detecting transaction system error in accordance with an embodiment;
FIG. 2 is a schematic diagram of a system of a cooperative transaction system in accordance with an embodiment;
FIG. 3 is a flowchart of a method of detecting transaction system error in accordance with an embodiment;
FIG. 4 is a flowchart of steps of detecting a transaction data transmission link successively according to detection items in a detection sequence table in accordance with an embodiment;
FIG. 5 is a flowchart of steps of detecting a transaction data format conversion file in a central transaction server in accordance with an embodiment;
FIG. 6 is a flowchart of steps of detecting a transaction data transmission link successively according to detection items in a detection sequence table in accordance with another embodiment;
FIG. 7 is a logic processing diagram of a method of detecting transaction system error in accordance with an embodiment;
FIG. 8 is a block diagram of a device of detecting transaction system error in accordance with an embodiment;
FIG. 9 is a block diagram of a computer equipment in accordance with an embodiment.

### DETAILED DESCRIPTION OF THE EMBODIMENTS

In order to make the objects, technical solutions and advantages of the present disclosure more comprehensible, the present disclosure will be further described in detail with reference to the accompanying drawings and embodiments. It should be understood that the specific embodiments described herein are only used to explain the present disclosure, and are not intended to limit the present disclosure.

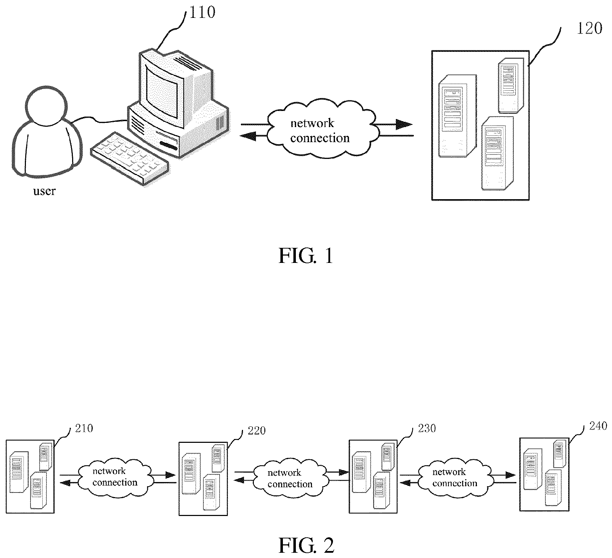

FIG. 1 is a schematic diagram of an application environment of a method of detecting transaction system error according to one embodiment. As shown in FIG. 1, the application environment includes a terminal 110 and a cooperative transaction system 120. When a user operates the terminal 110 and inputs a transaction identifier, the terminal automatically determines a transaction data flow direction category corresponding to the transaction identifier after acquiring the transaction identifier, finds a detection sequence table that matches the transaction data flow direction category, determines a transaction data transmission link corresponding to the transaction identifier in the cooperative transaction system 120, and detects the transaction data transmission link according to detection items arranged in sequence in the detection sequence table. The terminal 110 can be a personal computer or a mobile terminal. The mobile terminal can be a mobile phone, a tablet, and the like.

FIG. 2 is a schematic diagram of a system of the cooperative transaction system according to an embodiment. As shown in FIG. 2, the cooperative transaction system includes a business server 210, a central transaction server 220, an internal prepositive server 230, and a partner prepositive server 240. The business server 210 is coupled to the central transaction server 220 via a network, the central transaction server 220 is coupled to the internal prepositive server 230 via the network, and the internal prepositive server 230 is coupled to the partner prepositive server 240 via the network. The business server 210 can initiate a transaction which calls the partner prepositive server 240. In this case, a transaction data is output from the business server 210 and transmitted through the central transaction server 220, the internal prepositive server 230, and the partner prepositive server 240 to form a transaction data transmission link. The partner prepositive server 240 can also initiate a transaction which calls the business server 210. In that case, a transaction data is output from the partner prepositive server 240 and transmitted through the internal prepositive server 230, the central transaction server 220, and the business server 210 to form a transaction data transmission link.

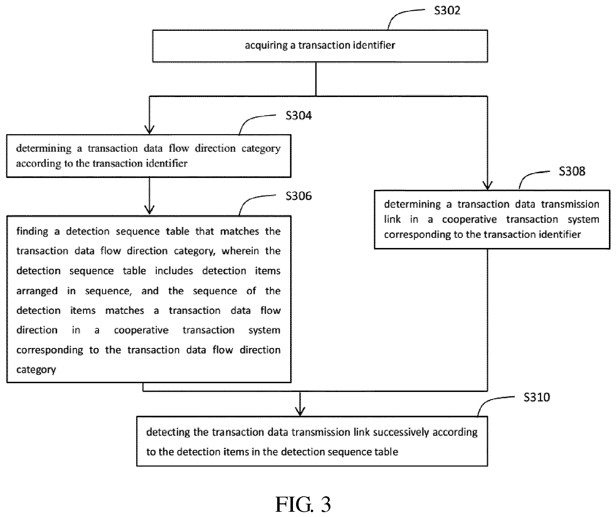

FIG. 3 is a flowchart of a method of detecting transaction system error according to an embodiment. The method applied to the terminal 110 illustrated in FIG. 1 is taken as an example for description. Referring to FIG. 3, the method of detecting transaction system error specifically includes following steps.

In step S302, a transaction identifier is acquired.

The transaction identifier is used for uniquely identifying a transaction generated in the cooperative transaction system. The cooperative transaction system refers to a transaction system based on cooperation among multiple systems. For example, a cooperative transaction system constituted of an insurance business system and a bank system can realize a transaction of purchasing insurance generated by a user. The transaction identifier can be a transaction code, or a combination of a transaction code and a partner code.

Specifically, each time a transaction is initiated, a corresponding transaction identifier is generated. The transaction identifier can include arbitrary computer supportable characters. A transaction related data of generating the transaction corresponding to the transaction identifier is stored in a database or a cache. The transaction related data includes a transaction data flow direction category, a transaction data transmission link, and the like. The terminal can acquire the transaction identifier by receiving a transaction identifier input by the user through an interface.

In step S304, a transaction data flow direction category corresponding to the transaction identifier is determined.

The transaction data flow direction category indicates a flow direction of the transaction data when passing through the cooperative transaction system and specifically indicates a flow direction of the transaction data from a caller of a transaction to a callee of the transaction. The cooperative transaction system involves cooperation among multiple systems. When the cooperative transaction system conducts a cooperative transaction, the party which initiates a transaction is the caller and the party that is called to conduct the cooperative transaction is the callee. Arbitrary system in the cooperative transaction system can be served as the caller of the transaction, and can be served as the callee of the transaction as well. The transaction data flow direction category can be a flow direction category from internal to partner, or a flow direction category from partner to internal.

Specifically, after acquiring the transaction identifier, the terminal finds the transaction related data corresponding to the transaction identifier in the database or the cache, and extracts the transaction data flow direction category in the transaction related data. The transaction data flow direction category can be a flow direction category from internal to partner, or a flow direction category from partner to internal.

In step S306, a detection sequence table that matches the transaction data flow direction category is found, and the detection sequence table includes detection items arranged in sequence, the sequence of the detection items matches a transaction data flow direction corresponding to the transaction data flow direction category in the cooperative transaction system.

The detection sequence table is a data table that is used for setting detection items arranging in a certain sequence. The detection items refer to detection items preset to be detected, and indicate specific items that are detected by the terminal, such as network connection status between servers and the like.

The terminal sets up the detection sequence table in the database or the cache according to the flow direction of the transaction data in the cooperative transaction system, and the detection sequence table includes each detection item from the caller of the transaction to the callee of the transaction in the cooperative system. In other words, the sequence of arranging the detection items matches the transaction data flow direction corresponding to the transaction data flow direction category in the cooperative system.

Specifically, after acquiring the transaction data flow direction category, the terminal finds the detection sequence table that matches the transaction data flow direction category in the database or the cache, and determines detection items to be detected and a detecting sequence according to the detection sequence table.

In step S308, a transaction data transmission link corresponding to the transaction identifier in the cooperative transaction system is determined.

The transaction data transmission link refers to a link constituted of specific servers through which the transaction data are flowed when a specific transaction is conducted in the cooperative transaction system. The transaction data transmission link includes a business server used for processing the transaction data corresponding to the transaction identifier, a central transaction server, an internal prepositive server, and a partner prepositive server. The central transaction server is coupled to the business server and the internal prepositive server. The partner prepositive server is coupled to the internal prepositive server.

Specifically, after acquiring the transaction identifier, the terminal finds the transaction data transmission link corresponding to the transaction identifier in the database or the cache, and determines the business server, the central transaction server, the internal prepositive server, and the partner prepositive server corresponding to the transaction identifier.

In step S310, the transaction data transmission link is detected successively according to the detection items in the detection sequence table.

Specifically, after determining the detection items to be detected and the detecting sequence according to the detection sequence table, the terminal successively detects the transaction data transmission link, which is constituted of the business server, the central transaction server, the internal prepositive server, and the partner prepositive server, and corresponds to the transaction identifier, according to the detection items in the detection sequence table.

In the method of detecting transaction system error described above, a transaction data flow direction category is automatically determined according to an acquired transaction identifier, a detection sequence table that matches the transaction data flow direction category is found, a transaction data transmission link corresponding to the transaction identifier in the cooperative transaction system is determined, the transaction data transmission link is detected successively according to detection items arranged in sequence in the detection sequence table, and detection results corresponding to the detection items are shown when the detection fails. An arranging sequence of the detection items are set in advance and matches the transaction data flow direction corresponding to the transaction data flow direction category in the cooperative transaction system. According to the detection method, the detections are automatically performed after acquiring the transaction identifier, which avoids a troublesome detection process of multiple interactions during a manual detection by a detector, thus greatly improving efficiency of the detection of transaction system error.

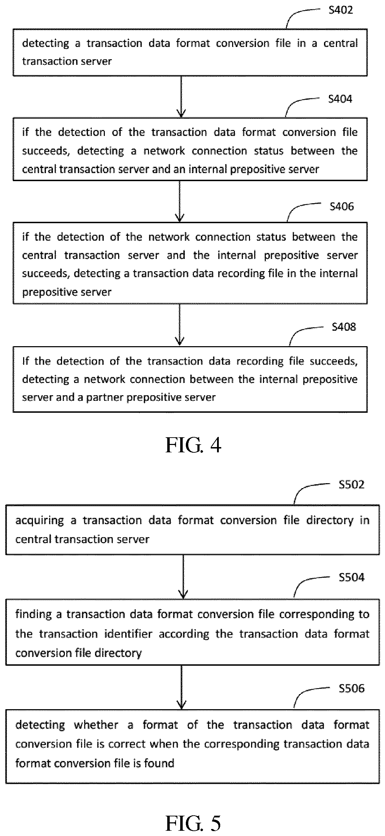

FIG. 4 is a flowchart of steps of the step S310 of detecting the transaction data transmission link successively according to the detection items in the detection sequence table when the transaction data flow direction category is a category from internal to partner. As shown in FIG. 4, the step S310 includes following steps.

In step S402, a transaction data format conversion file in the central transaction server is detected.

The transaction data format conversion file refers to a file which is used for converting a format of the transaction data. When a transaction involves cooperation of multiple systems, data formats of different systems may be different, therefore when a cooperative transaction generated among systems of different data formats, the data formats of the transaction data are required to be converted. The transaction data format conversion file can be an XSL (extensible stylesheet language) file, a CSS (cascading style sheets) file, and the like. Specifically, as shown in FIG. 5, the step S402 includes following steps.

In step S502, a transaction data format conversion file directory in the central transaction server is acquired.

Specifically, transaction data format conversion file corresponding to each partner whose data require to be converted is stored in the central transaction server, and a file directory is set up. The terminal can access the central transaction server and acquire the transaction data format conversion file directory stored in the central transaction server.

In step S504, a transaction data format conversion file corresponding to the transaction identifier is found according to the transaction data format conversion file directory.

Specifically, after acquiring the transaction data format conversion file directory, the terminal traverses directory entries of the file directory according to a correspondence between the directory entries and transaction identifier. When the directory entry traversed matches the acquired transaction identifier, the terminal acquires the transaction data format conversion file corresponding to the directory entry. The correspondence between the directory entries and the transaction identifiers is stored in the central transaction server.

In step S506, when a corresponding transaction data format conversion file is found, whether a format of the transaction data format conversion file is correct is detected.

Specifically, when the transaction data format conversion file corresponding to the transaction identifier is found, whether the format of the found transaction data format conversion file is correct is detected.

The format detection of the transaction data format conversion file can be an detection of whether a field structure in the file is matched or not. For example, for an XSL file, whether a forward slash "/" is properly used or not can be detected, and the forward slash "/" indicates a selection from a root node when the XSL file is used for format conversion. For example, an XSL file structure is determined to be matched when <xsl: otherwise> L2 </ xsl: otherwise> is detected, and an XSL file structure is determined to be mismatched when <xsl: otherwise> L2 <xsl: otherwise> is detected.

The format detection of the transaction data format conversion file can be a detection of whether extra spaces are included in a field structure in the file or not. For example, for an XSL file, it is determined that the XSL file does not contain extra spaces when detecting: <xsl: value-of select = "java: XSLString.strFillAll ($ a4, '15 ',' ',' R ')" /> , and it is determined that the XSL file contains extra spaces when detecting: <xsl: value-of select = "java: XSLString.strFillAll ($ a4, '15 ',' ',' R ')" />.

The format detection of the transaction data format conversion file can be a detection of whether a field property value structure in the file is normal or not. For example, for an XSL file, it is determined that the field property value structure in the XSL file is normal when detecting <xsl: variable name = "v_md5key">, and it is determined that the field property value structure in the XSL file is abnormal when detecting <xsl: variable name = "v_md5key>.

On the other hand, when the transaction data format conversion file corresponding to the transaction identifier is not found in the central transaction server, it indicates that the data format supported by the transaction caller and the transaction callee are the same, the transaction data format conversion is not required, and the step S404 can be directly performed.

In addition, after the detection of the transaction data format conversion file in the central transaction server is completed, the detection result can be displayed in a detection result display area. Alternatively, the detection result can be recorded in the file or cache, so that the detection result can be acquired when it is required to be viewed.

In step S404, when the detection of the transaction data format conversion file in the central transaction server succeeds, network connection status between the central transaction server and the internal prepositive server is detected.

Specifically, after the detection of the central transaction server succeeds, the network connection status between the central transaction server and the internal prepositive server is detected. In this embodiment, the transaction data flow direction category corresponding to the acquired transaction identifier is a category from internal to partner, that is, the transaction data flows from the central transaction server to the internal prepositive server, then whether the central transaction server is coupled to the internal prepositive server or not is detected. The central transaction server is a network detection initiator, and the internal prepositive server is a network connector to be detected.

The method of detecting the network connection status is carried out as follow. The terminal sends a network detection start instruction to the network detection initiator. After receiving the network detection start instruction, the network detection initiator sends a network detection instruction to the network connector which is to be detected. A feedback content for the network detection instruction is acquired, and whether the feedback content includes preset keywords or not is detected, if yes, the network connection between the network detection initiator and the network connector to be detected is determined as normal.

Specifically, the network detection initiator can detect the network connection status with a network port of the network connector to be detected by sending a "telnet (remote terminal protocol)" instruction. For example, "telnet 10.36.192.187 1600" means to detect the network connection status with a 1600 port of an IP address of "10.36.192.187". If a character string "Escape character is'^]'" is included in the feedback content for this instruction, the network connection is determined as normal, and when the character string is not included, the network connection is determined as abnormal.

Further, after completing the detection of the network connection status between the central transaction server and the internal prepositive server, the detection result can be displayed in the detection result display area, or be recorded in the file or cache, so that the detection result can be acquired when it is required to be viewed.

In step S406, when the detection of the network connection status between the central transaction server and the internal prepositive server succeeds, the transaction data recording file in the internal prepositive server is detected.

The transaction data recording file is used for recording transaction related information flowing through the internal prepositive server. Each internal prepositive server stores transaction data recording files for recording transactions passing through the internal prepositive server. Each time when a transaction passes through the internal prepositive server, a transaction identifier, a transaction data source, a transaction data flow direction, and the like of the transaction are recorded in the transaction data recording file of the internal prepositive server. The transaction data recording file can be an extensible markup language (XML) file, a hypertext markup language (HTML) file, or the like.

After detecting that the transaction between the central transaction server and the internal prepositive server is normal, the transaction data recording file in the internal prepositive server is detected. A transaction recording fields in the transaction data recording file corresponding to a transaction identifier is found according to the acquired transaction identifier, and whether format of the fields is correct or not is detected.

A format detection of the transaction data recording file can be a detection of whether the transaction recording field structure in the file corresponding to the transaction identifier is matched or not. For example, for an XML file, whether a forward slash "/" is properly used or not can be detected, and the forward slash "/" indicates a selection from a root node when the XSL file is used for format conversion. For example, the format of the fields is determined as correct when detecting <transmitIP> 192.168.29.98 </ transmitIP>, and the format of the fields is determined as incorrect when detecting <transmitIP> 192.168.29.98 <transmitIP>.

The format detection of the transaction data recording file can be a detection of whether extra space is included in a transaction recording fields in the file corresponding to the transaction identifier. For example, for an XML file, it is determined that the XML file does not include extra space when detecting <xsl: value-of select = "java: XSLString.strFillAll ($ a4, '15 ',' ',' R ')", and it is determined that the XML file includes extra space when detecting <xsl: value-of select = "java: XSLString.strFillAll ($ a4, '15 ','',' R ')" />.

The format detection of the transaction data recording file can be a detection of whether a transaction recording field property value structure in the file corresponding to the transaction identifier is normal or not. For example, it is determined that the field property value structure in the XML file is normal when detecting <item ip = "211.151.112.5"> , and it is determined that the field property value structure in the XML file is abnormal when detecting <item ip = "211.151.112.5>.

Further, after completing the format detection of the fields in the transaction data recording file in the internal prepositive server corresponding to the transaction identifier, the detection result can be displayed in the detection result display area, or be recorded in the file or cache, so that the detection result can be acquired when it is required to be viewed.

In step S408, when the detection of the transaction data recording file in the internal prepositive server succeeds, network connection status between the internal prepositive server and the partner prepositive server is detected.

Specifically, after completing the format detection of the fields in the transaction data recording file of the internal prepositive server corresponding to the acquired transaction identifier, the network connection status between the internal prepositive server and the partner prepositive server is detected. The terminal sends a network detection start instruction to the internal prepositive server. After receiving the network detection start instruction, the internal prepositive server sends a network detection instruction to the partner prepositive server. A feedback content for the network detection instruction is acquired, and whether the feedback content includes preset keywords or not is detected, if yes, the network connection between the internal prepositive server and the partner prepositive server is determined as normal.

Further, after completing the detection of the network connection status between the internal prepositive server and the partner prepositive server, the detection result can be displayed in the detection result display area, or be recorded in the file or cache, so that the detection result can be acquired when it is required to be viewed.

In this embodiment, when the data flow direction category is a category from internal to partner, a specific detecting method is provided for successively detecting specific transaction data transmission link corresponding to the transaction identifier according to the detection items in the detection sequence table. The user only needs to interact with the terminal for one time to enable the terminal to detect the transaction data transmission link, which avoids a troublesome detection process of multiple interactions during a manual detection by a detector, thus greatly improving efficiency of the detection of transaction system error.

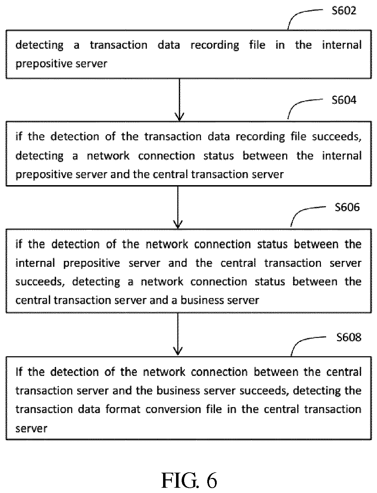

FIG. 6 is a flowchart of steps of the step S310 of detecting the transaction data transmission link successively according to the detection items in the detection sequence table when the transaction data flow direction category is a category from partner to internal. As shown in FIG. 6, the step S310 includes following steps.

In step S602, the transaction data recording file in the internal prepositive server is detected.

Specifically, after detecting that the transaction between the central transaction server and the internal prepositive server is normal, the transaction data recording file in the internal prepositive server is detected. A transaction recording field in the transaction data recording file corresponding to the transaction identifier is found according to the acquired transaction identifier, and whether a format of the field is correct is detected.

The format detection of the transaction data recording file can be a detection of whether a transaction recording field structure in the file corresponding to the transaction identifier is matched, a detection of whether extra space is included in a transaction recording field in the file corresponding to the transaction identifier, or a detection of whether a transaction recording field property structure in the file corresponding to the transaction identifier is normal.

Further, after completing the format detection of the filed in the transaction data recording file of the internal prepositive server corresponding to the acquired transaction identifier, the detection result can be displayed in the detection result display area, or be recorded in the file or cache, so that the detection result can be acquired when it is required to be viewed.

In step S604, when the detection of the transaction data recording file succeeds, network connection status between the internal prepositive server and the central transaction server is detected.

Specifically, after completing the format detection of the field in the transaction data recording file of the internal prepositive server corresponding to the acquired transaction identifier, the network connection status between the internal prepositive server and the central transaction server is detected. The terminal sends a network detection start instruction to the internal prepositive server. After receiving the network detection start instruction, the internal prepositive server sends a network detection instruction to the central transaction server. A feedback content for the network detection instruction is acquired and whether the feedback content includes preset keywords or not is detected, if yes, the network connection between the internal prepositive server and the central transaction server is determined as normal. Further, after completing the detection of the network connection status between the internal prepositive server and the central transaction server, the detection result can be displayed in the detection result display area, or be recorded in the file or cache so that the detection result can be acquired when it is required to be viewed.

In step S606, when the detection of the network connection status between the internal prepositive server and the central transaction server succeeds, network connection status between the central transaction server and the business server is detected.

Specifically, after completing the detection of the network connection status between the internal prepositive server and the central transaction server, the network connection status between the central transaction server and the business server is detected. The terminal sends a network detection start instruction to the central transaction server. After receiving the network detection start instruction, the central transaction server sends a network detection instruction to the business server. A feedback content for the network detection instruction is acquired, and whether the feedback content includes preset keywords is detected, if yes, the network connection between the central transaction server and the business server is determined as normal.

Further, after completing the detection of the network connection status between the central transaction server and the business server, the detection result can be displayed in the detection result display area, or be recorded in the file or cache, so that the detection result can be acquired when it is required to be viewed.

In step S608, when the detection of the network connection status between the central transaction server and the business server succeeds, a transaction data format conversion file in the central transaction server is detected.

Specifically, after completing the detection of the network connection status between the central transaction server and the business server, the transaction data format conversion file in the transaction server is detected. The terminal can access the central transaction server, acquire a transaction data format conversion file directory stored in the central transaction server, and traverse directory entries of the file directory accordding to a correspondence between the directory entries and the transaction identifier. When the directory entry traversed matches the acquired transaction identifier, the terminal acquires the transaction data format conversion file corresponding to the directory entry. When the transaction data format conversion file corresponding to the transaction identifier is found, whether the format of the found transaction data format conversion file is correct is detected. If no transaction data format conversion file corresponding to the transaction identifier is found in the central transaction server, it indicates that the data format of the transaction caller and the transaction callee are the same, and no transaction data format conversion therebetween is required.

Further, after completing the detection of the transaction data format conversion file in the central transaction server, the detection result can be displayed in the detection result display area, or be recorded in a file or cache, so that the detection result can be acquired when it is required to be viewed.

In this embodiment, specific detecting method is provided for successively detecting specific transaction data transmission link corresponding to the transaction identifier according to the detection items in the detection sequence table when the data flow direction category is a category from partner to internal. The user only needs to interact with the terminal one time to enable the terminal to detect the transaction data transmission link, which avoids a troublesome detection process of multiple interactions during a manual detection by a detector, thus greatly improving efficiency of the detection of transaction system error.

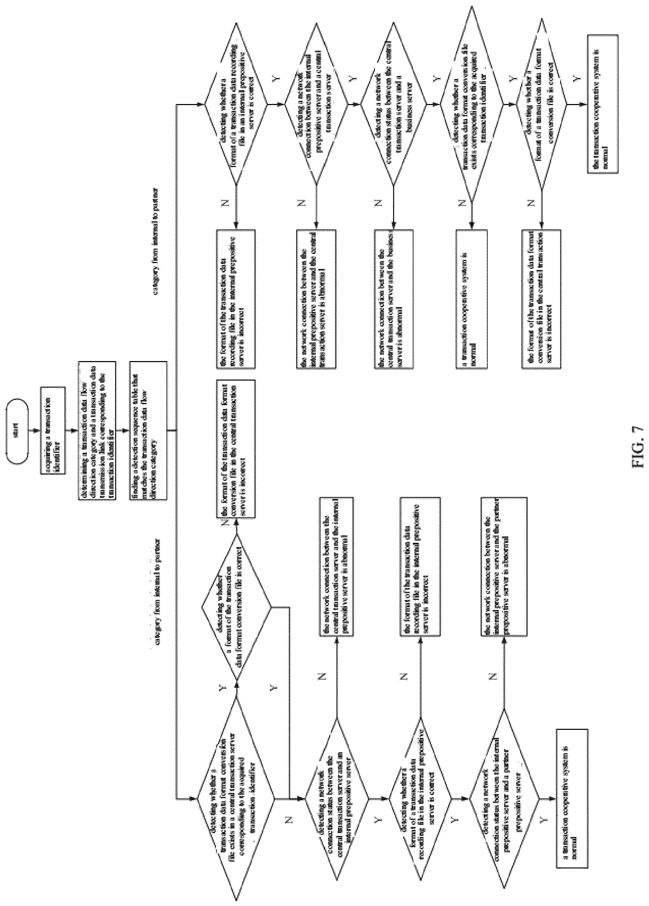

FIG. 7 illustrates a logical processing diagram of a method of detecting transaction system error according to one embodiment. As shown in FIG. 7, after acquiring an input transaction identifier, the terminal determines a transaction data flow direction category and a transaction data transmission link corresponding to the transaction identifier, finds a detection sequence table that matches the transaction data flow direction category.

When the transaction data flow direction category is a category from internal to partner, the transaction data transmission link is successively detected according to the detection items in the detection sequence table. First, the transaction data format conversion file in the central transaction server is detected, a transaction data format conversion directory is found, and whether a transaction data format conversion file corresponding to the acquired transaction identifier exists or not is detected. If yes, whether the format of the transaction data format conversion file is correct or not is detected. When the format of the file is correct, then the network connection status between the central transaction server and the internal prepositive server is detected; and when the format of the file is incorrect, an information which indicates that the format of the transaction data format conversion file of the central transaction server is incorrect is displayed in the detection result display area. If no transaction data format conversion file is detected, the network connection status between the central server and the internal prepositive server is detected.

When the network connection between the central transaction server and the internal prepositive server is abnormal, an information which indicates the network connection between the central transaction server and the internal prepositive server is abnormal is displayed in the detection result display area. When the network connection between the internal prepositive server and the partner prepositive server is normal, whether the format of the transaction data recording file in the internal prepositive server corresponding to the transaction identifier is correct is detected. When the format of the file is incorrect, an information which indicates that the format of the transaction data recording file in the internal prepositive server is incorrect is displayed in the detection result display area. When the format of the file is correct, network connection status between the internal prepositive server and the partner prepositive server is detected.

When the network connection between the internal prepositive server and the partner prepositive server is abnormal, an information which indicates that the network connection between the internal prepositive server and the partner prepositive server is abnormal is displayed in the detection result display area. When the network connection between the internal prepositive server and the partner prepositive server is normal, an information which indicates that the transaction cooperative system is normal is displayed in the detection result display area.

When the transaction data flow direction category is a category from partner to internal, the transaction data transmission link is successively detected according to the detection items in the detection sequence table. First, whether a format of the transaction data recording file in the internal prepositive server corresponding to the transaction identifier is correct or not is detected. When the format of the file is incorrect, an information which indicates that the format of the transaction data recording file in the internal prepositive server is incorrect is displayed in the detection result display area. When the format of the file is correct, the network connection status between the internal prepositive server and the central transaction server is detected.

When the network connection between the internal prepositive server and the central transaction server is abnormal, an information which indicates that the network connection between the internal prepositive server and the central transaction server is abnormal is displayed in the detection result display area. When the network connection between the internal prepositive server and the central transaction server is normal, the network connection status between the central transaction server and the business server is detected.

When the network connection between the central transaction server and the internal prepositive server is abnormal, an information which indicates that the network connection between the central transaction server and the business server is abnormal is displayed in the detection result display area. When the network connection between the central transaction server and the business server is normal, the transaction data format conversion file in the central transaction server corresponding to the transaction identifier is detected.

The transaction data format conversion file directory in the central transaction server is found and whether the transaction data format conversion file corresponding to the acquired transaction identifier exists or not is detected. If yes, whether the format of the transaction data format conversion file is correct or not is detected. When the format of the file is correct, an information which indicates that the transaction cooperative system is normal is displayed in the detection result display area. When the format of the file is incorrect, an information which indicates that the format of the transaction data format conversion file in the central transaction server is incorrect is displayed in the detection result display area. If no corresponding transaction data format conversion file is detected, an information which indicates that the transaction cooperative system is normal is displayed in the detection result display area.

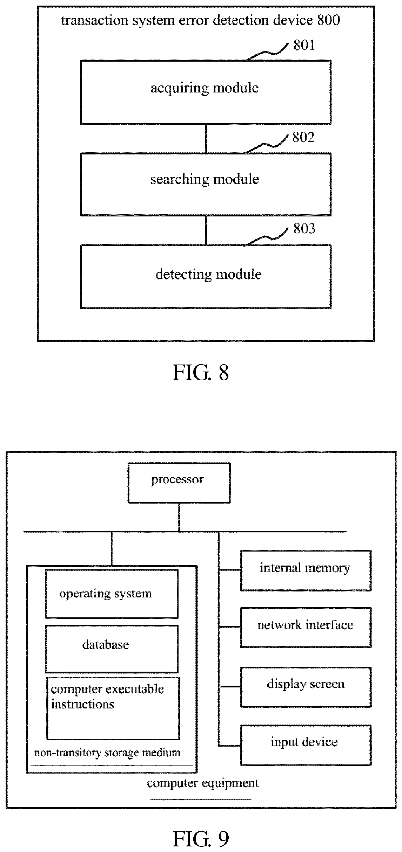

FIG. 8 is a block diagram of a device of detecting transaction system error according to one embodiment. Referring to FIG. 8, the device 800 of detecting transaction system error includes an acquiring module 801, a searching module 802, and a detecting module 803.

The acquiring module 801 is used for acquiring a transaction identifier, and determining a transaction data flow direction category corresponding to the transaction identifier.

The searching module 802 is used for finding a detection sequence table that matches the transaction data flow direction category. The detection sequence table includes detection items arranged in sequence, and the sequence of the detection items matches a transaction data flow direction in the cooperative transaction system corresponding to the transaction data flow direction category. The searching module is further used for determining a transaction data transmission link in a cooperative transaction system corresponding to the transaction identifier.

The detecting module 803 is used for successively detecting the transaction data transmission link according to the detection items in the detection sequence table.

The above-described device 800 of detecting transaction system error automatically determines the transaction data flow direction category corresponding to the transaction identifier according to the acquired transaction identifier, finds the detection sequence table that matches the transaction data flow direction category, determines the transaction data transmission link in the cooperative transaction system corresponding to the transaction identifier, detects the transaction data transmission link successively according to the detection items arranged in sequence in the detection sequence table, and displays the detection result corresponding to the detection item when the detection fails. The sequence of arranging the detection items is preset in advance and matches the transaction data flow direction in the cooperative transaction system corresponding to the transaction data flow direction category. According to the detection method, the detections are automatically performed after acquiring the transaction identifier, which avoids a troublesome detection process of multiple interactions during a manual detection by a detector, thus greatly improving efficiency of the detection of transaction system error.

In one embodiment, the transaction data transmission link includes a business server for processing transaction data corresponding to the transaction identifier, a central transaction server, an internal prepositive server, and a partner prepositive server. The central transaction server is coupled to the business server and the internal prepositive server. The partner prepositive server is coupled to the internal prepositive server.

In one embodiment, when the transaction data flow direction category is a category from internal to partner, the detecting module 803 is further used for detecting the transaction data format conversion file in the central transaction server; detecting the network connection status between the central transaction server and the internal prepositive server when the prior detection succeeds; detecting the network connection status between the internal prepositive server and the partner prepositive server when the prior detection succeeds; and detecting the transaction data recording file in the internal prepositive server when the prior detection succeeds.

In one embodiment, when the transaction data flow direction category is a category form partner to internal, the detecting module 803 is further used for detecting the transaction data recording file in the internal prepositive server; detecting the network connection status between the internal prepositive server and the central transaction server when the prior detection succeeds; detecting the transaction data format conversion file in the central transaction server when the prior detection succeeds; and detecting the network connection between the central transaction server and the business server when the prior detection succeeds.

In one embodiment, the detecting module 803 is further used for acquiring the transaction data format conversion file directory in the central transaction server; finding the transaction data format conversion file corresponding to the transaction identifier according to the transaction data format conversion file directory; and detecting whether the format of the transaction data format conversion file is correct or not when the corresponding transaction data format conversion file is found.

FIG. 9 is a block diagram of a computer equipment according to one embodiment. The computer equipment can be the specific terminal 110 illustrated in FIG. 1. As shown in FIG. 9, the computer equipment includes a processor, a non-transitory storage medium, an internal memory, a network interface, a display screen, and an input device connected by a system bus. The non-transitory storage medium of the computer equipment stores an operating system, a database, and computer executable instructions which are used for implementing a method of detecting transaction system error which is suitable for the computer equipment. The processor of the computer equipment is used for providing computing and control capabilities to support the operation of the entire computer equipment. The internal memory of the computer equipment can store computer-executable instructions which, when executed by the processor, can cause the processor to perform the method of detecting transaction system error. The network interface is used for network communication with a server, such as acquiring a transaction data format conversion file directory in the server or the like. The input device can be a touch layer covered on the display screen, an external keyboard, a touchpad, a mouse, and the like. It could be understood for those skilled in the art that the structure illustrated in FIG. 9 is merely a block diagram of a part of the structure related to the solution of the present application and does not constitute a limitation on the computer equipment to which the solution of the present application is applied. A specific computer equipment can include more or less components than what is illustrated in the figure, combine certain components, or have different components arrangement.

In one embodiment, the device of detecting transaction system error in each above embodiment can be implemented as a form of a computer program, and computer-executable instructions corresponding to the computer program can be performed on the computer equipment illustrated in FIG. 9.

Each above module of the device of detecting the transaction system error can be implemented in whole or part by software, hardware and combinations thereof. The network interface can be an Ethernet card, a wireless network card, and the like. Each above module can be embedded in or separated from the memory of the computer equipment in a form of hardware, or be stored in the memory of the computer equipment in a form of software, so that the processor can call and execute each operation of each above module. The processor can be a central processing unit (CPU), a microprocessor, a microcontroller, or the like.

In one embodiment, one or more computer readable non-transitory storage medium is provided, storing computer readable instructions which, when executed by one or more processors, cause the one or more processors to perform following steps of: acquiring a transaction identifier; determining a transaction data flow direction category corresponding to the transaction identifier; finding a detection sequence table that matches the transaction data flow direction category, wherein the detection sequence table includes detection items arranged in sequence, and the sequence of the detection items matches a transaction data flow direction in the cooperative transaction system corresponding to transaction data flow direction category; determining a transaction data transmission link in the cooperative transaction system corresponding to the transaction identifier; and detecting the transaction data transmission link successively according to the detection items in the detection sequence table.

In one embodiment, the transaction data transmission link includes a business server for processing transaction data corresponding to the transaction identifier, a central transaction server, an internal prepositive server, and a partner prepositive server. The central transaction server is coupled to the business server and the internal prepositive server, and the partner prepositive server is coupled to the internal prepositive server.

In one embodiment, when the transaction data flow direction category is a category from internal to partner, the step of detecting the transaction data transmission link successively according to the detection items in the detection sequence table includes: detecting a transaction data format conversion file in the central transaction server; detecting network connection status between the central transaction server and the internal prepositive server when the prior detection succeeds; detecting a transaction data recording file in the internal prepositive server when the prior detection succeeds; and detecting network connection status between the internal prepositive server and the partner prepositive server when the prior detection succeeds when the prior detection succeeds.

In one embodiment, when the transaction data flow direction category is the category from partner to internal, the step of detecting the transaction data transmission link successively according to the detection items in the detection sequence table includes: detecting the transaction data recording file in the internal prepositive server; detecting network connection status between the internal prepositive server and the central transaction server when the prior detection succeeds; detecting network connection status between the central transaction server and the business server when the prior detection succeeds; and detecting the transaction data format conversion file in the central transaction server when the prior detection succeeds.

In one embodiment, the detecting the transaction data format conversion file in the central transaction server includes: acquiring a transaction data format conversion file directory in the central transaction server; finding a transaction data format conversion file corresponding to the transaction identifier according to the transaction data format conversion file directory; and detecting whether a format of the transaction data format conversion file is correct or not when the corresponding transaction data format conversion file is found.

The above storage medium automatically determines the transaction data flow direction category corresponding to the transaction identifier according to the acquired transaction identifier, finds the detection sequence table that matches the transaction data flow direction category, determines the transaction data transmission link in the cooperative transaction system corresponding to the transaction identifier, detects the transaction data transmission link successively according to the detection items arranged in sequence in the detection sequence table, and displays the detection result corresponding to the detection item when the detection fails. The sequence of the detection items is preset in advance and matches the transaction data flow direction in the cooperative transaction system corresponding to the transaction data flow direction category. According to the detection method, the detections are automatically performed after acquiring the transaction identifier, which avoids a troublesome detection process of multiple interactions during a manual detection by a detector, thus greatly improving efficiency of the detection of transaction system error.

A person of ordinary skill in the art could understand that all or part processes of the method in the foregoing embodiments can be implemented by relevant hardware instructed by a computer program. The computer program can be stored in a non-transitory computer readable storage medium, and when executed includes the processes of the method in foregoing embodiments. The storage medium can be a magnetic disk, an optical disk, a read-only memory (ROM), or the like.

Each technical feature in foregoing embodiments can be combined casually. In order to make the description simple, all other possible combinations of the technical features in the foregoing embodiments are not described. However, as long as there is no conflict between the technical features of the embodiments in other possible combinations, they should be considered as the scope of this manual.

The above-mentioned embodiments merely present several embodiments of the present disclosure, which are described specifically and in detail but should not be interpreted as limit to the scope of the present disclosure. It should be noted that those skilled in the art may make various modifications and improvements without departing from the concept of the present disclosure, all of which fall in the protection scope of the present disclosure. Therefore, the protection scope of the present disclosure shall be subject to the appended claims.

## Claims

1. A method of detecting transaction system error, comprising:
acquiring a transaction identifier;
determining a transaction data flow direction category corresponding to the transaction identifier;
finding a detection sequence table that matches the transaction data flow direction category, wherein the detection sequence table comprises detection items arranged in sequence, the sequence of the detection items matches a transaction data flow direction corresponding to the transaction data flow direction category in a cooperative transaction system;
determining a transaction data transmission link corresponding to the transaction identifier in the cooperative transaction system; and
detecting the transaction data transmission link successively according to the detection items in the detection sequence table.

2. The method according to claim 1, wherein the transaction data transmission link comprises a business server configured to process a transaction data corresponding to the transaction identifier, a central transaction server, an internal prepositive server, and a partner prepositive server, wherein the central transaction server is coupled to the business server and the internal prepositive server, and the partner prepositive server is coupled to the internal prepositive server.

3. The method according to claim 2, wherein when the transaction data flow direction category is a category from internal to partner, the detecting the transaction data transmission link successively according to the detection items in the detection sequence table comprises:
detecting a transaction data format conversion file in the central transaction server;
when the prior detection succeeds, detecting a network connection status between the central transaction server and the internal prepositive server;
when the prior detection succeeds, detecting a transaction data recording file in the internal prepositive server; and
when the prior detection succeeds, detecting a network connection status between the internal prepositive server and the partner prepositive server.

4. The method according to claim 2, wherein when the transaction data flow direction category is a category from partner to internal, the detecting the transaction data transmission link successively according to the detection items in the detection sequence table comprises:
detecting a transaction data recording file in the internal prepositive server;
when the prior detection succeeds, detecting a network connection status between the internal prepositive server and the central transaction server;
when the prior detection succeeds, detecting a network connection status between the central transaction server and the business server; and
when the prior detection succeeds, detecting a transaction data format conversion file in the central transaction server.

5. The method according to claim 3 or claim 4, wherein the detecting the transaction data format conversion file in the central transaction server comprises:
acquiring a transaction data format conversion file directory in the central transaction server;
finding the transaction data format conversion file corresponding to the transaction identifier according to the transaction data format conversion file directory; and
when the corresponding transaction data format conversion file is found, detecting whether a format of the transaction data format conversion file is correct.

6. A device of detecting transaction system error, comprising:
an acquiring module configured to acquire a transaction identifier and determine a transaction data flow direction category corresponding to the transaction identifier;
a searching module configured to find a detection sequence table that matches the transaction data flow direction category, wherein the detection sequence table comprises detection items arranged in sequence, the sequence of the detection items matches a transaction data flow direction corresponding to the transaction data flow direction category in a cooperative transaction system; and determine a transaction data transmission link corresponding to the transaction identifier in the cooperative transaction system; and
a detecting module configured to detect the transaction data transmission link successively according to the detection items in the detection sequence table

7. The device according to claim 6, wherein the transaction data transmission link comprises a business server configured to process a transaction data corresponding to the transaction identifier, a central transaction server, an internal prepositive server, and a partner prepositive server, wherein the central transaction server is coupled to the business server and the internal prepositive server, and the partner prepositive server is coupled to the internal prepositive server..

8. The device according to claim 7, wherein when the transaction data flow direction category is a category from internal to partner, the detecting module is further configured to detect a transaction data format conversion file in the central transaction server;
when the detection of the transaction data format conversion file in the central transaction server succeeds, then detect a network connection status between the central transaction server and the internal prepositive server;
when the detection of the network connection status between the central transaction server and the internal prepositive server succeeds, then detect a network connection status between the internal prepositive server and the partner prepositive server; and
when the detection of the network connection status between the internal prepositive server and the partner prepositive server succeeds, then detect a transaction data recording file in the internal prepositive server.

9. The device according to claim 7, wherein when the transaction data flow direction category is a category from partner to internal, the detecting module is further configured to detect a transaction data recording file in the internal prepositive server;
when the detection of the transaction data recording file in the internal prepositive server succeeds, then detect a network connection status between the internal prepositive server and the central transaction server;
when the detection of the network connection status between the internal prepositive server and the central transaction server succeeds, then detect a transaction data format conversion file in the central transaction server;
when the detection of the transaction data format conversion file in the central transaction server succeeds, then detect a network connection status between the central transaction server and the business server.

10. The device according to claim 8 or claim 9, wherein the detecting module is further configured to acquire a transaction data format conversion file directory in the central transaction server; find the transaction data format conversion file corresponding to the transaction identifier according to the transaction data format conversion file directory; and when the corresponding transaction data format conversion file is found, detect whether a format of the transaction data format conversion file is correct.

11. One or more computer-executable non-transitory storage medium storing computer readable instructions that, when executed on one or more processors, cause the one or more processors to perform following steps of:
acquiring a transaction identifier;
determining a transaction data flow direction category corresponding to the transaction identifier;
finding a detection sequence table that matches the transaction data flow direction category, wherein the detection sequence table comprises detection items arranged in sequence, the sequence of the detection items matches a transaction data flow direction corresponding to the transaction data flow direction category in a cooperative transaction system;
determining a transaction data transmission link corresponding to the transaction identifier in the cooperative transaction system; and
detecting the transaction data transmission link successively according to the detection items in the detection sequence table.

12. The storage medium according to claim 11, wherein the transaction data transmission link comprises a business server configured to process the transaction data corresponding to the transaction identifier, a central transaction server, an internal prepositive server, and a partner prepositive server, wherein the central transaction server is coupled to the business server and the internal prepositive server, and the partner prepositive server is coupled to the internal prepositive server.

13. The storage medium according to claim 12, wherein when the transaction data flow direction category is a category from internal to partner, the detecting the transaction data transmission link successively according to the detection items in the detection sequence table comprises:
detecting a transaction data format conversion file in the central transaction server;
when the prior detection succeeds, then detecting a network connection status between the central transaction server and the internal prepositive server;
when the prior detection succeeds, then detecting a transaction data recording file in the internal prepositive server; and
when the prior detection succeeds, then detecting a network connection status between the internal prepositive server and the partner prepositive server.

14. The storage medium according to claim 12, wherein when the transaction data flow direction category is a category from partner to internal, the detecting the transaction data transmission link successively according to the detection items in the detection sequence table comprises:
detecting a transaction data recording file in the internal prepositive server;
when the prior detection succeeds, then detecting a network connection status between the internal prepositive server and the central transaction server;
when the prior detection succeeds, then detecting a network connection status between the central transaction server and the business server; and
when the prior detection succeeds, then detecting a transaction data format conversion file in the central transaction server.

15. The storage medium according to claim 13 or claim 14, wherein the detecting the transaction data format conversion file in the central transaction server comprises:
acquiring a transaction data format conversion file directory in the central transaction server;
finding the transaction data format conversion file corresponding to the transaction identifier according to the transaction data format conversion file directory; and
when the corresponding transaction data format conversion file is found, detecting whether a format of the transaction data format conversion file is correct.

16. A computer equipment, comprising:
a processor; and
a memory storing computer readable instructions, which, when executed by the processor causes the processor to perform following steps of:
acquiring a transaction identifier;
determining a transaction data flow direction category corresponding to the transaction identifier;
finding a detection sequence table that matches the transaction data flow direction category, wherein the detection sequence table comprises detection items arranged in sequence, the sequence of the detection items matches a transaction data flow direction corresponding to the transaction data flow direction category in a cooperative transaction system;
determining a transaction data transmission link corresponding to the transaction identifier in the cooperative transaction system; and
detecting the transaction data transmission link successively according to the detection items in the detection sequence table.

17. The computer equipment according to claim 16, wherein the transaction data transmission link comprises a business server configured to process a transaction data corresponding to the transaction identifier, a central transaction server, an internal prepositive server, and a partner prepositive server, wherein the central transaction server is coupled to the business server and the internal prepositive server, and the partner prepositive server is coupled to the internal prepositive server.

18. The computer equipment according to claim 17, wherein when the transaction data flow direction category is a category from internal to partner, the detecting the transaction data transmission link successively according to the detection items in the detection sequence table comprises:
detecting a transaction data format conversion file in the central transaction server;
when the prior detection succeeds, then detecting a network connection status between the central transaction server and the internal prepositive server;
when the prior detection succeeds, then detecting a transaction data recording file in the internal prepositive server; and
when the prior detection succeeds, then detecting a network connection status between the internal prepositive server and the partner prepositive server.

19. The computer equipment according to claim 17, wherein when the transaction data flow direction category is a category from partner to internal, the detecting the transaction data transmission link successively according to the detection items in the detection sequence table comprises:
detecting a transaction data recording file in the internal prepositive server;
when the prior detection succeeds, then detecting a network connection status between the internal prepositive server and the central transaction server;
when the prior detection succeeds, then detecting a network connection status between the central transaction server and the business server; and
when the prior detection succeeds, then detecting a transaction data format conversion file in the central transaction server.

20. The computer equipment according to claim 18 or claim 19, wherein the detecting the transaction data format conversion file in the central transaction server comprises:
acquiring a transaction data format conversion file directory in the central transaction server;
finding the transaction data format conversion file corresponding to the transaction identifier according to the transaction data format conversion file directory; and
when the corresponding transaction data format conversion file is found, detecting whether a format of the transaction data format conversion file is correct.
